# EUROPEAN PATENT SPECIFICATION

(11) **EP 4 052 925 B1**
(45) Date of publication and mention of the grant of the patent: **13.08.2025**
(21) Application number: 20880571.3
(22) Date of filing: 30.10.2020
(51) Int. Cl.: B60C 1/00, C08C 19/25, C08F 8/00, C08F 36/06, C08L 9/06, C08K 3/36, C08F 236/10, C08C 19/22, C08C 19/44, C08L 15/00

(54) **METHOD FOR PRODUCING MODIFIED CONJUGATED-DIENE-BASED POLYMER, POLYMER COMPOSITION, CROSSLINKED OBJECT, AND TIRE**
VERFAHREN ZUM PRODUZIEREN EINES MODIFIZIERTEN KONJUGIERTEN DIENPOLYMERS, POLYMERZUSAMMENSETZUNG, VERNETZTES POLYMER UND REIFEN
PROCÉDÉ DE PRODUCTION D'UN POLYMÈRE À BASE DE DIÈNE CONJUGUÉ MODIFIÉ, COMPOSITION DE POLYMÈRE, OBJET RÉTICULÉ ET PNEU

(30) Priority: 31.10.2019 JP 2019199435
(43) Date of publication of application: 07.09.2022
(73) Proprietor: ENEOS Materials Corporation, Tokyo 105-7109 (JP)
(72) Inventor: KOTO, Yuma, Tokyo 105-8640 (JP); WATANABE, Keisuke, Tokyo 105-8640 (JP); ITOU, Ken-ichi, Tokyo 105-8640 (JP)
(74) Representative: TBK
(86) International application number: PCT/JP2020/040893
(87) International publication number: WO 2021/085616

(56) References cited:
- EP-A1- 2 130 842
- EP-A1- 2 554 553
- EP-A1- 2 703 416
- EP-A1- 2 963 066
- WO-A1-2007/114203
- WO-A1-2017/221943
- JP-A- 2014 177 519
- JP-A- 2017 165 680
- US-A1- 2010 113 851

## Description

### Technical Field

The present disclosure relates to a method for producing a modified conjugated diene-based polymer, a polymer composition, a cross-linked product, and a tire.

### Background Art

A conjugated diene-based polymer obtained by polymerization of a conjugated diene compound exhibits various good properties such as thermal resistance, wear resistance, mechanical strength, and molding processability, and thus have been widely used in various industrial products such as pneumatic tires, anti-vibration rubber, and hoses. It is known that, for example, a rubber composition used for producing treads, sidewalls, etc. of pneumatic tires, includes a conjugated diene-based polymer as well as reinforcing agents such as carbon black and silica in order to improve the durability and wear resistance of the product.

Further, in order to enhance the affinity between a conjugated diene-based polymer and silica, a modified conjugated diene-based polymer of which terminal is modified with an alkoxysilyl group-containing compound has been used. It is conceivable to use a modified polymer having more alkoxy groups introduced as functional groups capable of binding to the silica surface for improvement in the affinity between the polymer and silica. Accordingly, it has been conventionally proposed that a polyfunctional modifier having a plurality of alkoxysilyl groups in a single molecule is reacted with a conjugated diene-based polymer having an active terminal, and a modified conjugated diene-based polymer obtained in the reaction is included into a rubber composition. (See, e.g., WO 2017/221943 A1 and JP 2014-177519 A.)

Further, WO 2007/114203 A1 discloses a method for producing a conjugated diene rubber wherein a specific compound is added into a solution of a polymer having an active terminal for causing a reaction with the polymer. JP 2017-165680 A discloses a process for producing α-olefin low polymer by carrying out a low polymerization reaction of α-olefin with a catalyst. US 2010/113851 A1 discloses a method of deactivating and quenching an oligomerization catalyst.

### Summary of Invention

### Technical Problem

When a polyfunctional modifier is used, the number of unreacted alkoxysilyl groups increases in the modified polymer. In that case, it is concerned that the characteristics of the polymer (raw rubber) and the rubber composition may change due to the influence of unreacted alkoxysilyl groups during storage, and the storage stability of the polymer and the rubber composition may decrease.

The present disclosure has been made in view of the above problem, and a main object of the present invention is to provide a method for producing a modified conjugated diene-based polymer by which a modified conjugated diene-based polymer and a rubber composition having excellent storage stability can be obtained, and a polymer composition containing the modified conjugated diene-based polymer obtained by the production method.

### Solution to Problem

The present disclosure provides a method for producing a modified conjugated diene-based polymer, a modified conjugated diene-based polymer, a polymer composition, a cross-linked product, and a tire.

The present disclosure provides a method for producing a modified conjugated diene-based polymer, comprising:
a polymerization step of polymerizing a monomer comprising a conjugated diene compound in the presence of an alkali metal compound or an alkali earth metal compound to obtain a polymer having an active terminal;
a modification step of reacting the polymer having an active terminal with a compound [M] having a plurality of hydrocarbyloxysilyl groups to obtain a modified polymer; and
a mixing step of mixing the modified polymer with at least one compound [C] selected from the group consisting of a compound [N] having one hydrocarbyloxysilyl group and an alcohol having 6 to 20 carbon atoms in an organic solvent.

The present disclosure provides a modified conjugated diene-based polymer obtained by:
polymerizing a monomer comprising a conjugated diene compound in the presence of an alkali metal compound or an alkali earth metal compound to obtain a polymer having an active terminal;
reacting the polymer having an active terminal and a compound [M] having a plurality of hydrocarbyloxysilyl groups to obtain a modified polymer; and
mixing the modified polymer and at least one compound [C] selected from the group consisting of a compound [N] having one hydrocarbyloxysilyl group and an alcohol having 6 to 20 carbon atoms in an organic solvent. The present disclosure provides a polymer composition comprising a modified conjugated diene-based polymer obtained by the above method and silica.

The present disclosure provides a cross-linked product obtained by cross-linking the above polymer composition. The present disclosure provides a tire comprising a tread, a sidewall, or both of them formed from the above polymer composition.

### Advantageous Effects of Invention

According to the present disclosure, after the reaction between a conjugated diene-based polymer having an active terminal and the compound [M], a modified polymer obtained by the reaction and the compound [C] are mixed. Thereby, a modified conjugated diene-based polymer excellent in storage stability can be obtained. Further, by using the modified conjugated diene-based polymer, a rubber composition excellent in storage stability can be obtained.

### Description of Embodiments

The matters relating to the implementation of the present disclosure will be described in detail below. The modified conjugated diene-based polymer of the present disclosure is produced by a method including the following polymerization step, modification step and mixing step.

### <Polymerization step>

The present step is a step of polymerizing a monomer containing a conjugated diene compound to obtain a conjugated diene-based polymer having an active terminal. Examples of the conjugated diene compound used for polymerization include 1,3-butadiene, isoprene, 2,3-dimethyl-1,3-butadiene, 1,3-pentadiene, 1,3-hexadiene, 1,3-heptadiene, 2-phenyl-1,3-butadiene, 3-methyl-1,3-pentadiene, and 2-chloro-1,3-butadiene. Among these, at least any of 1,3-butadiene, isoprene and 2,3-dimethyl-1,3-butadiene preferably is used, and more preferably 1,3-butadiene is included.

Although the conjugated diene-based polymer may be a homopolymer of a conjugated diene compound, a copolymer of a conjugated diene compound and an aromatic vinyl compound is preferred from the viewpoint of enhancing the strength of rubber. Examples of the aromatic vinyl compound used for polymerization include styrene, 2-methylstyrene, 3-methylstyrene, 4-methylstyrene, α-methylstyrene, 2,4-dimethylstyrene, 2,4-diisopropylstyrene, vinylethylbenzene, divinylbenzene, trivinylbenzene, divinylnaphthalene, t-butoxystyrene, vinylbenzyldimethylamine, (4-vinylbenzyl)dimethyl aminoethyl ether, 2-ethylstyrene, 3-ethylstyrene, 4-ethylstyrene, 2-t-butylstyrene, 3-t-butylstyrene, 4-t-butylstyrene, 5-t-butyl-2-methylstyrene, vinylxylene, vinylnaphthalene, vinylpyridine, diphenylethylene, and tertiary amino group-containing diphenylethylene (e.g., 1-(4-N,N-dimethylaminophenyl)-1-phenylethylene, N,N-dimethylaminoethylstyrene, and N,N-dimethylaminomethylstyrene). As the aromatic vinyl compound, it is preferable to use styrene, α-methylstyrene, or both.

In the case where the conjugated diene-based polymer is a copolymer of a conjugated diene compound and an aromatic vinyl compound (hereinafter, also referred to as "copolymer A"), it is preferable that the copolymer A be a polymer obtained from monomers including 1,3-butadiene and styrene, from the viewpoint of high living properties in anion polymerization. It is preferable that the copolymer A have a random copolymer portion with an irregular distribution of the conjugated diene compound and the aromatic vinyl compound. The copolymer A may further have a block portion made of a conjugated diene compound or an aromatic vinyl compound.

In the case where the conjugated diene-based polymer is the copolymer A, the proportion of the aromatic vinyl compound used (that is, the proportion of structural units derived from the aromatic vinyl compound in the polymer) is preferably 3 to 55% by mass, more preferably 5 to 50% by mass, with respect to the total amount of the conjugated diene compound and the aromatic vinyl compound used for polymerization, from the viewpoint of improving the balance between the low hysteresis loss characteristics and wet skid resistance of the resulting cross-linked polymer. The proportion of structural units derived from the aromatic vinyl compound in the polymer (hereinafter, also referred to as "bonding styrene content") is a value measured by ¹H-NMR. Each of the conjugated diene compound and the aromatic vinyl compound may be used alone, or in combination of two or more.

In the polymerization, monomers other than the conjugated diene compound and the aromatic vinyl compound (hereinafter, also referred to as "other monomers") may be used. Examples of the other monomers include acrylonitrile, methyl (meth)acrylate, and ethyl (meth)acrylate. The proportion of other monomers used is preferably 10% by mass or less, more preferably 5% by mass of less, with respect to the total amount of monomers used in polymerization.

As the polymerization method for use, a solution polymerization method is preferred. As the polymerization type, any of a batch type or a continuous type may be used. Specific examples of the polymerization method include a method of polymerizing monomers including a conjugated diene compound in an organic solvent in the presence of a polymerization initiator and a randomizer (also referred to as vinyl content adjusting agent) used on an as needed basis.

The polymerization initiator include an alkali metal compound and an alkali earth metal compound (hereinafter, also referred to as "metal compound"). Specific examples of the metal compound include an alkyllithium such as methyllithium, ethyllithium, n-propyllithium, n-butyllithium, sec-butyllithium, and t-butyllithium; 1,4-dilithiobutane, phenyllithium, stilbenelithium, naphthyllithium, 1,3-bis(1-lithio-1,3-dimethylpentyl)benzene, 1,3-phenylenebis(3-methyl-1-phenylpentylidene)dilithium, naphthylsodium, naphthylpotassium, di-n-butylmagnesium, di-n-hexylmagnesium, ethoxypotassium, and calcium stearate. Among these, a lithium compound is preferred. In the polymerization, the proportion of the metal compound used (the total amount thereof in the case of using two or more types) is preferably 0.2 to 20 mmol with respect to 100 g of the monomers used in polymerization.

In the polymerization reaction, as the polymerization initiator, a compound that is obtained by mixing a metal compound and a compound having a functional group that interacts with silica (hereinafter, also referred to as compound [D]) may be used. Through polymerization of monomers in the presence of the compound, a functional group derived from the compound [D] can be introduced into the polymerization initiation terminal of the conjugated diene-based monomer. The modified conjugated diene-based polymer of the present disclosure, which is a polymer with a functional group that interacts with silica introduced at the initiation terminal, is preferred because a cross-linked product made therefrom can have more improved low fuel consumption performance.

In the present specification, the term "functional group capable of interacting with silica" refers to a group having an element capable of interacting with silica, such as nitrogen, sulfur, phosphorus, or oxygen. The term "interaction" refers to formation of a covalent bond between molecules, or formation of intermolecular force (e.g., intermolecular electromagnetic force, such as ion-dipole interaction, dipole-dipole interaction, hydrogen bond, or van der Waals force) weaker than a covalent bond.

The compound [D] is preferably a nitrogen-containing compound such as a secondary amine compound. Specific examples of the nitrogen-containing compound include a chain amine such as dimethylamine, diethylamine, dipropylamine, dibutylamine, dodecamethyleneimine, N,N'-dimethyl-N'-trimethylsilyl-1,6-diaminohexane, di-(2-ethylhexyl)amine, and diallylamine; and a cyclic amine such as piperidine, pyrrolidine, hexamethyleneimine, heptamethyleneimine, dicyclohexylamine, N-methylbenzylamine, morpholine, N-(trimethylsilyl)piperazine, N-(tertbutyldimethylsilyl)piperazine, and 1,3-ditrimethylsilyl-1,3,5-triazinane. Among these, the compound [D] is preferably a cyclic amine, more preferably a nitrogen-containing heterocyclic amine.

In the case of carrying out the polymerization of monomers in the presence of a compound that is obtained by mixing the metal compound and the compound [D], the metal compound and the compound [D] may be mixed in advance, and the polymerization may be carried out by adding the mixture to the polymerization system. Alternatively, the polymerization may be carried out by adding the metal compound and the compound [D] to the polymerization system separately or concurrently, and mixing both in the polymerization system. Any of the cases is included in the embodiment comprising "polymerizing monomers including a conjugated diene compound in the presence of a compound obtained by mixing an alkali metal compound or an alkali earth metal compound with a compound [D]. The compound obtained by mixing an alkali metal compound or an alkali earth metal compound with a compound [D] is preferably a metal amide compound.

The amount of the compound [D] used with respect to the metal compound is appropriately set according to the type of the metal compound used. For example, in the case of using metal lithium, the amount of compound [D] used is preferably in the range of 0.1 to 1.8 mol, more preferably in the range of 0.2 to 1.0 mol, and still more preferably in the range of 0.3 to 0.98 mol, with respect to 1 mol in total of metal lithium used in the polymerization, from the viewpoint of achieving a good balance between processability of the resulting rubber composition and low fuel consumption performance of the resulting cross-linked product. The compound [D] may be used alone or in combination of two or more.

The randomizer can be used for the purpose of, for example, adjustment of the vinyl bond content (i.e., the amount of vinyl bonds) of the polymer. Examples of the randomizer include dimethoxybenzene, tetrahydrofuran, dimethoxyethane, diethylene glycol dibutyl ether, diethylene glycol dimethyl ether, 2,2-di(tetrahydrofuryl)propane, 2-(2-ethoxyethoxy)-2-methylpropane, triethylamine, pyridine, N-methylmorpholine, and tetramethylethylenediamine. The randomizer may be used alone or in combination of two or more.

The organic solvent used for polymerization may be any organic solvent that is inert to the reaction. Examples of the organic solvent include aliphatic hydrocarbons, alicyclic hydrocarbons, and aromatic hydrocarbons. Among these, the organic solvent is preferably a C3 to C8 hydrocarbon. Specific examples of the organic solvent used for polymerization include propane, n-butane, isobutane, n-pentane, isopentane, n-hexane, cyclohexane, propene, 1-butene, isobutene, trans-2-butene, cis-2-butene, 1-hexene, 2-hexene, benzene, toluene, xylene, ethylbenzene, heptane, cyclopentane, methylcyclopentane, methylcyclohexane, 1-pentene, 2-pentene, and cyclohexene. The organic solvent may be used alone or in combination of two or more.

In the case of the solution polymerization, the monomer concentration of the reaction solvent is preferably 5 to 50 mass%, more preferably 10 to 30 mass%, from the viewpoint of maintaining the balance between productivity and polymerization controllability. The polymerization reaction temperature is preferably -20°C to 150°C, more preferably 0 to 120°C. The polymerization reaction is preferably performed under a pressure sufficient to maintain the monomer substantially in a liquid phase. Such a pressure can be achieved by, for example, pressurizing the reactor by use of a gas employed inert to the polymerization reaction.

Through such a polymerization reaction, a conjugated diene-based polymer having an active terminal can be obtained. The weight average molecular weight (Mw) in terms of polystyrene measured by gel permeation chromatography (GPC) of the conjugated diene-based polymer obtained is preferably 5.0×10⁴ or more, more preferably 8.0×10⁴ or more, still more preferably 1.0×10⁵ or more, from the viewpoint of sufficiently securing the tensile strength, low heat generation, and wear resistance of the cross-linked product obtained from the polymer composition (i.e., rubber composition) of the present disclosure. Further, from the viewpoint of further improving the processability of the rubber composition, Mw is preferably 1.0×10⁶ or less, more preferably 8.0×10⁵ or less, and still more preferably 5.0×10⁵ or less.

The vinyl bond content (hereinafter, also referred to as "vinyl content") is preferably 30 to 70% by mass with respect to the conjugated diene-based polymer having an active terminal. A vinyl bond content of 30% by mass or more is preferred, because the grip characteristics of the cross-linked product obtained from the rubber composition can be sufficiently enhanced. Further, a vinyl bond content of 70% by mass or less is preferred, because the wear resistance of the cross-linked product can be sufficiently enhanced. The vinyl bond content is more preferably 33% by mass or more, still more preferably 35% by mass or more. The vinyl bond content is more preferably 68% by mass or less, still more preferably 65% by mass. In the present specification, the term "vinyl bond content" is a value indicating the content proportion of structural units having 1,2-bonds with respect to all the structural units of butadiene in the conjugated diene-based polymer, and is a value measured by ¹H-NMR.

### <Modification step>

In the present step, the active terminal of the conjugated diene-based polymer obtained by the polymerization step is reacted with a compound [M] having a plurality of hydrocarbyloxysilyl groups. By the reaction, a modified conjugated diene-based polymer having a branched structure in which a conjugated diene-based polymer chain is bonded to a plurality of reactive sites of the compound [M] (hereinafter, also simply referred to as "modified polymer") is obtained.

In the present specification, the term "active terminal" means a portion other than the structure derived from the monomer having a carbon-carbon double bond, which is present at the end of the molecular chain (more specifically, a metal terminal). The term "hydrocarbyloxysilyl group" is a group in which at least one hydrocarbyloxy group is bonded to a silicon atom, and is represented by formula (3). Accordingly, the "compound having a plurality of hydrocarbyloxysilyl groups" is a compound having two or more groups represented by the formula (3) in a molecule. 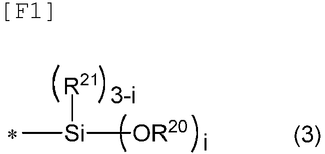 wherein R²⁰ and R²¹ each are independently a hydrocarbyl group; i is an integer of 1 to 3; and "*" represents a bond.

The compound [M] may have a plurality of hydrocarbyloxysilyl groups in a molecule. In particular, the compound [M] is preferably a nitrogen-containing compound because the low heat generation properties can be further improved when formed into a cross-linked product. Specifically, the compound [M] is preferably at least one selected from the group consisting of a compound represented by formula (1) and a compound represented by formula (2). 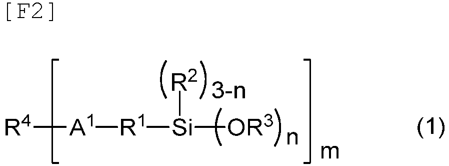 wherein R¹ is a hydrocarbylene group having 1 to 20 carbon atoms, R² and R³ each are independently a hydrocarbyl group having 1 to 20 carbon atoms, A¹ is a group "*-C(R⁵)=N-" or a group "*-N=C(R⁵)-", wherein R⁵ is a hydrogen atom or a hydrocarbyl group, and "*" represents a bond for bonding to R⁴; R⁴ is an m-valent hydrocarbon group having 1 to 20 carbon atoms or an m-valent group having at least one atom selected from the group consisting of nitrogen, oxygen and sulfur, and no active hydrogen, and having 1 to 20 carbon atoms; n is an integer of 1 to 3 and m is an integer of 2 to 10; for symbols of R¹ to R³ and A¹ each, in the case where a plurality of the same symbols are present in the formula, the groups represented by the symbols are the same or different groups from each other; and the plurality of n in the formula are the same number or different numbers from each other. 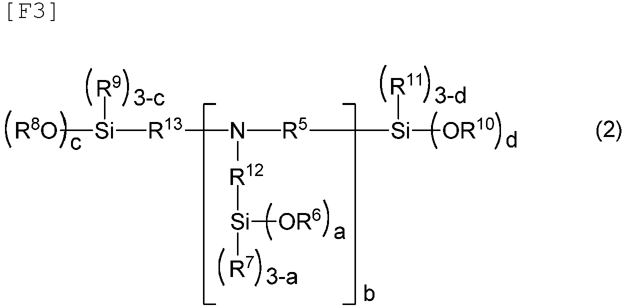 wherein R⁵, R¹² and R¹³ each are independently a hydrocarbylene group having 1 to 12 carbon atoms, and R⁶, R⁷, R⁸, R⁹, R¹⁰ and R¹¹ each are independently a hydrocarbyl group having 1 to 20 carbon atoms; a, c and d each are independently an integer of 1 to 3, and b is an integer of 1 to 10; for symbols of R⁵ to R¹² each, in the case where a plurality of the same symbols are present in the formula, the groups represented by the symbols are the same or different groups from each other; and in the case where 2 or more b are present, the plurality of a in the formula are the same number or different numbers from each other.

In the formula (1), examples of the hydrocarbylene group of R¹ include an alkanediyl group having 1 to 20 carbon atoms, a cycloalkylene group having 3 to 20 carbon atoms, and an arylene group having 6 to 20 carbon atoms. Examples of the hydrocarbyl group of R² and R³ include an alkyl group having 1 to 20 carbon atoms, an allyl group, a cycloalkyl group having 3 to 20 carbon atoms, and an aryl group having 6 to 20 carbon atoms.

The m-valent hydrocarbon group of R⁴ is a group obtained by removing m hydrogen atoms from a hydrocarbon. Among these, the m-valent hydrocarbon group of R⁴ is preferably a group obtained by removing m hydrogen atoms from the ring portion of an aromatic hydrocarbon (m-valent aromatic group). Specific examples of the aromatic hydrocarbon include a monocyclic or condensed ring such as a benzene ring, a naphthalene ring, and an anthracene ring, and a structure in which two or more of these rings are bonded through a single bond.

In the case where R⁴ is a m-valent group having at least one atom selected from the group consisting of nitrogen, oxygen and sulfur, having no active hydrogen and having 1 to 20 carbon atoms, specific examples thereof include a m-valent heterocyclic group, and m-valent group having a tertiary amine structure. The heterocyclic group is preferably a conjugated system, and examples thereof include a monocyclic or condensed ring such as pyridine, pyrimidine, pyrazine, quinoline, naphthalidine, furan, and thiophene, or a group obtained by removing m hydrogen atoms from the ring portion of the structure having a plurality of the rings that are linked. In the present specification, the term "active hydrogen" refers to a hydrogen atom bonded to an atom other than a carbon atom, and preferably has a lower binding energy than the carbon-hydrogen bond of polymethylene.

From the viewpoint of further improving the processability of the rubber composition, m is preferably 2 to 6. From the viewpoint of enhancing the improvement effect for silica dispersibility, n is preferably 2 or 3, more preferably 3.

In the formula (2), examples of the hydrocarbylene group of R⁵, R¹² and R¹³ include an alkanediyl group having 1 to 12 carbon atoms, a cycloalkylene group having 3 to 12 carbon atoms, and an arylene group having 6 to 12 carbon atoms. R⁵, R¹² and R¹³ are preferably alkanediyl groups, more preferably linear alkanediyl groups. Examples of the hydrocarbyl group of R⁶ to R¹¹ include an alkyl group having 1 to 20 carbon atoms, an allyl group, a cycloalkyl group having 3 to 20 carbon atoms, and an aryl group having 6 to 20 carbon atoms.

From the viewpoint of enhancing the improvement effect for silica dispersibility, a, c and d are preferably 2 or 3, more preferably 3. Further, b is preferably 1 to 5, more preferably 1 to 3.

Specific examples of the compound [M] include compounds represented by the formula (1) such as compounds represented by each of formulas (m-1-1) to (m-1-8) : 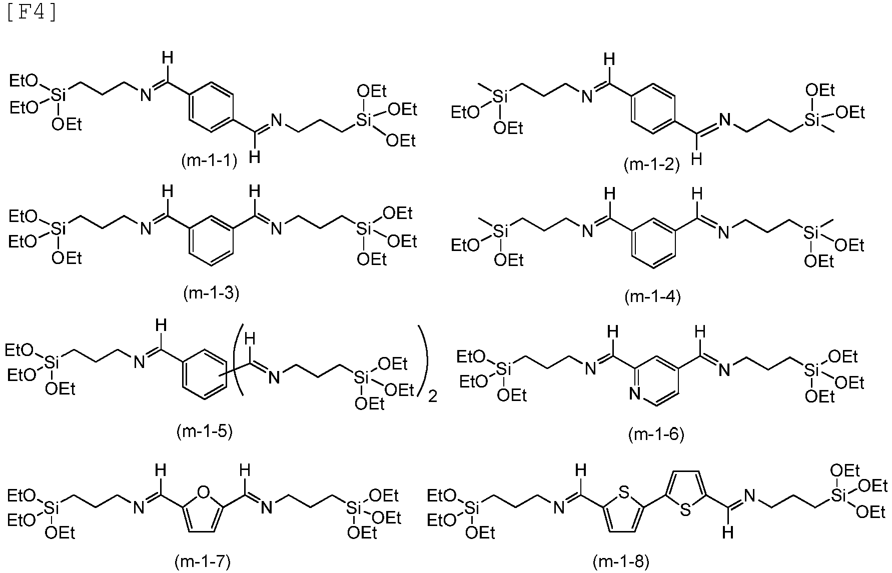 and compounds with the alkyl group and the alkanediyl group of the above compounds substituted with an alkyl group having 1 to 6 carbon atoms and an alkanediyl group having 1 to 6 carbon atoms, respectively; and compounds represented by the formula (2) such as tris(2-triethoxysilylethyl)amine, tris(3-triethoxysilylpropyl)amine, tris(5-triethoxysilylpentyl)amine, N,N,N',N'-tetra(2-triethoxysilylethyl)-1,2-diaminoethane, N,N,N',N'-tetra(3-triethoxysilylpropyl)-1,3-diaminopropane, and compounds with the alkyl group and the alkanediyl group in these compounds substituted with an alkyl group having 1 to 6 carbon atoms and an alkanediyl group having 1 to 6 carbon atoms, respectively. The compound [M] may be used alone, or in combination of two or more.

The reaction between the conjugated diene-based polymer having an active terminal and the compound [M] is preferably a solution reaction. The proportion of compound [M] used (the total amount in the case of using two or more types) is preferably 0.01 mol or more, more preferably 0.05 mol or more, with respect to 1 mol of the metal atom of a polymerization initiator involved in the polymerization, from the viewpoint of sufficiently advancing the modification reaction. The proportion of compound [M] used is preferably less than 2.0 mol, more preferably less than 1.5 mol, with respect to 1.0 mol of metal atom of the polymerization initiator involved in the polymerization, in order to avoid addition of an excessive amount of compound [M].

Further, in the reaction of the conjugated diene-based polymer having an active terminal and the compound [M], the proportion of the compound [M] used is controlled such that the total amount of groups "-OR²⁰" (that is, the number of reactive sites) in the groups represented by the formula (3) of the compound [M] is preferably more than 1.0 mol, more preferably 1.5 mol or more, and still more preferably 2.0 mol or more, with respect to 1.0 mol of the metal atom of the polymerization initiator involved in the polymerization, from the viewpoint of obtaining a cross-linked product having better low heat generation properties. Further, the total amount of the group "-OR²⁰" is preferably 20.0 mol or less, more preferably 15.0 mol or less, with respect to 1.0 mol of the metal atom of the polymerization initiator involved in the polymerization.

The temperature of the modification reaction is usually the same as that of the polymerization reaction. Specifically, from the viewpoint of suppressing the deactivation of the polymerization active terminal while suppressing the increase in viscosity of the polymer after modification, the temperature is preferably -20°C to 150°C, more preferably 0 to 120°C. The reaction time is preferably 1 minute to 5 hours, more preferably 2 minutes to 1 hour.

### <Mixing step>

In the present step, the modified polymer obtained by the above modification step and at least one compound [C] selected from the group consisting of a compound [N] having one hydrocarbyloxysilyl group and an alcohol having 6 to 20 carbon atoms are mixed.

### · Regarding compound [N]

The compound [N] has one group represented by the formula (3) in one molecule. As the compound [N], a known terminal modifier used for introducing a hydrocarbyloxysilyl group at the polymerization end terminal of a conjugated diene-based polymer, which has one hydrocarbyloxysilyl group, may be used. From the viewpoint of sufficiently obtaining the effect of improving storage stability, the compound [N] is preferably a low molecular weight compound having a molecular weight of 800 or less, more preferably 600 or less. In the present specification, the term "low molecular weight compound" means a compound having no molecular weight distribution.

Specific examples of the compound [N] include a compound represented by formula (4), a compound represented by formula (5), a compound represented by formula (6), and a compound represented by formula (7). 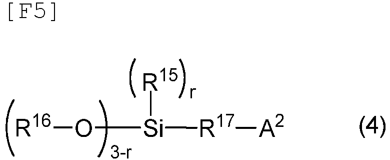 wherein A² is a monovalent functional group having at least one atom selected from the group consisting of nitrogen, phosphorus, oxygen and sulfur, having no active hydrogen, and bonding to R¹⁷ through a nitrogen atom, a phosphorus atom, an oxygen atom, a sulfur atom, or a carbon atom in a carbonyl group, or a (thio)epoxy group. R¹⁵ and R¹⁶ are hydrocarbyl groups, R¹⁷ is a hydrocarbylene group, and r is an integer of 0 to 2. In the case where r is 0 or 1, a plurality of R¹⁶ in the formula are the same or different groups, and in the case where r is 2, a plurality of R¹⁵ in the formula are the same or different groups from each other. 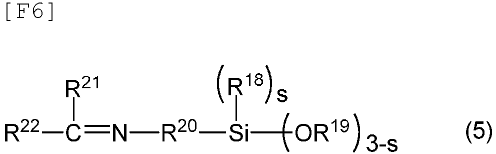 wherein R¹⁸ and R¹⁹ each are independently hydrocarbyl groups having 1 to 18 carbon atoms, and R²⁰ is a hydrocarbylene group having 1 to 20 carbon atoms. R²¹ and R²² each are independently a hydrogen atom, a hydrocarbyl group having 1 to 18 carbon atoms, or a monovalent group having 2 to 18 carbon atoms and having at least one of -NR^{a}- (wherein R^{a} is a hydrocarbyl group), -N= and -O- inserted in a carbon-carbon bond of the hydrocarbyl group, or represents a cyclic structure constituted with the carbon atom to which R²¹ and R²² combined with each other are bonded. However, R²¹ and R²² are not simultaneously hydrogen atoms. Herein, s is an integer of 0 to 2. In the case where s is 2, a plurality of R¹⁸ in the formula are the same group or different groups from each other, and in the case where s is 0 or 1, the plurality of R¹⁹ in the formula are the same group or different groups from each other. 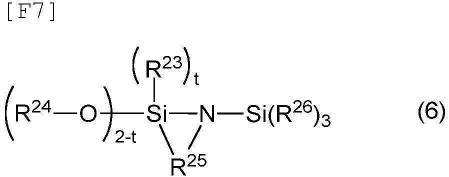 wherein R²³, R²⁴ and R²⁶ each are independently a hydrocarbyl group, R²⁵ is a hydrocarbylene group, and t is 0 or 1. In the case where t is 0, the plurality of R²⁴ in the formula are the same group or different groups from each other. The plurality of R²⁶ in the formula are the same group or different groups from each other. 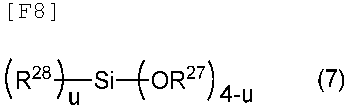 wherein R²⁷ and R²⁸ each are independently a hydrocarbyl group having 1 to 20 carbon atoms. Herein, u is an integer of 0 to 3. In the case where u is 0 to 2, the plurality of R²⁷ in the formula is the same group or different groups from each other, and in the case where u is 2 or 3, the plurality of R²⁸ in the formula are the same group or different groups from each other.

In the formulas (4) to (7), the hydrocarbyl groups of R¹⁵, R¹⁶, R¹⁸, R¹⁹, R²³, R²⁴, R²⁶, R²⁷ and R²⁸ is preferably a linear or branched alkyl group having 1 to 20 carbon atoms, a cycloalkyl group having 3 to 20 carbon atoms, or an aryl group having 6 to 20 carbon atoms. R¹⁷ and R²⁵ are preferably a linear or branched alkanediyl group having 1 to 20 carbon atoms, a cycloalkylene group having 3 to 20 carbon atoms, or an arylene group having 6 to 20 carbon atoms. R²⁰ is preferably an alkanediyl group, more preferably a linear alkanediyl group.

It is preferable that at least one atom selected from the group consisting of nitrogen, phosphorus, oxygen and sulfur which A² has be not bonded to an active hydrogen and be protected by a protecting group (for example, a trisubstituted hydrocarbylsilyl group). A² may be a group that can be turned into an onium ion by an onium salt producing agent.

Specific examples of A² include a nitrogen-containing group with two hydrogen atoms of a primary amino group substituted by two protective groups, a nitrogen-containing group with one hydrogen atom of a secondary amino group substituted by one protective group, a tertiary amino group, an imino group, a pyridyl group, a phosphorus-containing group with two hydrogen atom of a primary phosphino group substituted by two protective groups, a phosphorus-containing group with one hydrogen atom of a secondary phosphino group substituted by one protective group, a tertiary phosphino group, an epoxy group, a group with a hydrogen atom of a hydroxy group protected by a protective group, a thioepoxy group, a sulfur-containing group with a hydrogen atom of a thiol group substituted by a protective group, and a hydrocarbyloxycarbonyl group. Among these, A² is preferably a group having a nitrogen atom, more preferably a nitrogen-containing group with two hydrogen atoms of a tertiary amino group or a primary amino group substituted by two protecting groups. Incidentally, the term "protecting group", in the present specification is a functional group that allows A² to be converted into a functional group inert to the polymerization active terminal. The term "(thio)epoxy group" includes an epoxy group and a thioepoxy group.

Specific examples of the compound [N] include N,N-bis(trimethylsilyl)aminopropyltrimethoxysilane, N,N-bis(trimethylsilyl)aminopropylmethyldiethoxysilane, N,N',N'-tris(trimethylsilyl)-N-(2-aminoethyl)-3-aminopropyltriethoxysilane, 3-(4-trimethylsilyl-1-piperazino)propylmethyldimethoxysilane, 3-glycydoxypropylmethyldimethoxysilane, and 3-glycidoxypropyltriethoxysilane as the compounds represented by the formula (4); N-ethylidene-3-triethoxysilyl-1-propaneamine, N-(1-methylethylidene)-3-triethoxysilyl-1-propaneamine, N-(1-methypropylidene)-3-triethoxysilyl-1-propaneamine, N-(1,3-dimethylbutylidene)-3-triethoxysilyl-1-propaneamine, N-cyclohexylidene-3-triethoxysilyl-1-propaneamine, and N-(4-N,N-dimethylaminobenzylidene)-3-triethoxysilyl-1-propaneamine, as the compounds represented by the formula (5);
1-trimethylsilyl-2,2-dimethoxy-1-aza-2-silacyclopentane, and 1-triethylsilyl-2,2-diethoxy-1-aza-2-silacyclopentane as the compounds represented by the formula (6); and
dimethoxydimethylsilane, diethoxydiethylsilane, triethoxymethylsilane, tetramethoxysilane, and tetraethoxysilane as the compound represented by the formula (7). Further, the compound [N] may be a compound with the alkyl group and the alkanediyl group in the exemplified compound substituted by an alkyl group having 1 to 6 carbon atoms and an alkanediyl group having 1 to 6 carbon atoms, respectively.

Among the compounds [C], the alcohol having 6 to 20 carbon atoms may be a linear or branched one, preferably a linear one. Specific examples of the alcohol include hexanol, heptanol, octanol, nonanol, decanol, dodecanol, pentadecanol, and octadecanol. Among these, alcohols having 7 or more carbon atoms are preferred, alcohols having 8 or more carbon atoms are more preferred, and alcohols having 9 or more carbon atoms are still more preferred, from the viewpoint of sufficiently obtaining the effect of improving the storage stability of the modified conjugated diene-based polymer and the rubber composition.

The treatment of mixing the modified polymer and the compound [C] is performed in an organic solvent. Examples of the organic solvent for use include the organic solvents exemplified as solvents that can be used for polymerization. In the case where the compound [C] is added to a polymer solution containing a modified polymer, the method of adding the compound [C] is not particularly limited, and examples thereof include a method of adding all at once, a method of dividedly adding, and a method of continuously adding. The temperature at which the modified polymer and the compound [C] are mixed is preferably -20 to 150°C, more preferably 0 to 120°C, and still more preferably 20 to 100°C, which is the same as the temperature of the polymerization reaction. The time from the start to the end of mixing is preferably 1 minute to 3 hours, more preferably 2 minutes to 1 hour.

The amount of compound [C] used is preferably 0.1 molar equivalent or more, more preferably 0.3 molar equivalent or more, with respect to the metal atoms of the polymerization initiator involved in the polymerization reaction. It is preferable that the amount of compound [C] used be set to 0.1 molar equivalent or more, because the effect of improving the storage stability of the modified conjugated diene-based polymer before vulcanization (raw rubber) and the rubber composition can be sufficiently obtained. Further, the amount of the compound [C] used is preferably 5.0 molar equivalent or less, more preferably 3.0 molar equivalent or less, with respect to the metal atoms of the polymerization initiator involved in the polymerization reaction, from the viewpoint of suppressing the deterioration of the characteristics due to an excessive amount of addition. The compound [C] may be used alone, or in combination of two or more.

From the viewpoint of productivity, in the present production method, monomers containing a conjugated diene compound is solution-polymerized in the presence of a polymerization initiator, and a polymer solution obtained thereby (referred to as "polymer solution A") is used as it is so as to cause reaction between the polymer having an active terminal and the compound [M] in the polymer solution A. Subsequently, using the modified polymer solution (referred to as "polymer solution B") as it is, it is preferable to add the compound [C] to the polymer solution B. In this case, it is preferable that the proportion of the monomers used in the polymerization step and the proportion of the compound [C] used in the mixing step be set, such that the proportion of the compound [C] used with respect to 1 part by mol of the modified polymer is preferably 0.1 to 5 parts by mol, more preferably 0.3 to 3 parts by mol.

In the present production method, the total amount of the compound [M] and the compound [C] used is preferably 0.5 mol or more, more preferably 0.7 mol or more, and still more preferably 1 mol or more, with respect to 1 mol of the metal atom of the polymerization initiator involved in the polymerization. The total amount of the compound [M] and the compound [C] used is preferably 20 mol or less, more preferably 15 mol or less, with respect to 1 mol of the metal atom of the polymerization initiator involved in the polymerization.

In the mixing step, it is preferable that the modified polymer and the compound [C] be mixed without adding a condensation catalyst to the system after completion of the reaction between the polymer having an active terminal and compound [M]. The condensation catalyst in this context is a condensation catalyst of an alkoxysilane compound containing a metal element, including alkoxides, carboxylates or acetylacetonate complex salts having any metal element of Group 4 elements, Group 12 elements, Group 13 elements, Group 14 elements and Group 15 elements in the periodic table.

After contacting the modified polymer with the compound [C] in a solvent by mixing, an isolation step of isolating the modified conjugated diene-based polymer from the polymer solution is carried out. The modified conjugated diene-based polymer can be isolated from the polymer solution by a known desolvation method such as steam stripping and a drying operation such as heat treatment.

In the case where the modified conjugated diene-based polymer contained in the rubber composition has a large number of unreacted hydrocarbyloxy groups, an interaction between the modified conjugated diene-based polymer and silica is improved, so that the low fuel consumption performance can be improved. On the other hand, the polymers easily react with each other due to the large number of unreacted hydrocarbyloxy groups, so that it is conceivable that the viscosity increases during storage before vulcanization. In contrast, the production of a modified conjugated diene-based polymer by a method including the mixing step allows the compound [C] to suppress the reaction between the polymers during storage before vulcanization. It is presumed that the storage stability during storage before vulcanization can have been improved thereby.

### <Polymer composition>

The polymer composition (rubber composition) of the present disclosure contains a modified conjugated diene-based polymer obtained by the above production method and silica. The amount of the modified conjugated diene-based polymer in the polymer composition is preferably 10% by mass or more, more preferably 20% by mass or more, and still more preferably 25% by mass or more, with respect to the total amount of the polymer composition. The amount of the modified conjugated diene-based polymer in the polymer composition is preferably 50% by mass or less, more preferably 45% by mass or less, with respect to the total amount of the polymer composition.

Examples of the silica include wet silica (hydrated silica), dry silica (silicic anhydride), colloidal silica, precipitated silica, calcium silicate, and aluminum silicate. Of these, wet silica is particularly preferred from the viewpoint of an improvement in fracture resistance, and the compatibility between wet grip resistance and low rolling resistance. Also, use of high dispersible-type silica is preferred for achieving favorable dispersion of the silica in the polymer composition and improvements in physical properties and processability. These silica materials may be used alone or in combination of two or more.

The polymer composition may contain, in addition to silica, any reinforcing filler (e.g., carbon black, clay, or calcium carbonate). Preferably, silica is used alone, or carbon black and silica are used in combination. The total amount of silica and carbon black contained in the polymer composition is preferably 20 to 130 parts by mass, more preferably 25 to 110 parts by mass, with respect to 100 parts by mass of the total amount of rubber components contained in the polymer composition. In the present specification, the term "rubber component" contained in the polymer composition means a polymer capable of obtaining a cured product that exhibits rubber elasticity by thermosetting. At room temperature, the cured product exhibits properties of undergoing a large deformation by a small force (for example, a two-fold deformation or more when stretched at room temperature), and rapidly returning to almost its original shape when the force is removed.

A cross-linking agent is blended into the polymer composition of the present disclosure. Examples of the cross-linking agent include sulfur, sulfur halides, organic peroxides, quinonedioximes, organic polyvalent amine compounds, and alkylphenol resins having a methylol group, and sulfur is usually used. The dosage of sulfur is preferably 0.1 to 5 parts by mass, more preferably 0.5 to 3 parts by mass, with respect to 100 parts by mass of the total amount of rubber components contained in the polymer composition.

In the polymer composition of the present disclosure, as rubber component in addition to the modified conjugated diene-based polymer of the present disclosure, a rubber component (hereinafter, referred to as "other rubber component") different from the modified conjugated diene-based polymer may be included. The type of the other rubber component is not particularly limited, and examples thereof include a butadiene rubber (BR, for example, high cis BR having 90% or more of cis-1,4 bond, and syndiotactic-1,2-polybutadiene (SPB)-containing BR), styrene butadiene rubber (SBR), natural rubber (NR), isoprene rubber (IR), styrene isoprene copolymer rubber, and butadiene isoprene copolymer rubber. The other rubber components are more preferably BR and SBR. The content of the other rubber component in the polymer composition is preferably 60% by mass or less, more preferably 50% by mass or less, with respect to the total amount of the modified conjugated diene-based rubber of the present disclosure and the other rubber component.

The polymer composition may contain, as an extender oil, a process oil commonly used for oil extension of an elastomer. The process oil is incorporated into the polymer composition through, for example, direct addition of the oil during incorporation of a rubber component. Examples of preferred process oils include various oils known in the art. Examples of the process oils include aromatic oils, paraffinic oils, naphthenic oils, vegetable oils, and oils having a low polycyclic aromatic compound content (low PCA oils), such as mild extraction solvate (MES), treated distillate aromatic extract (TDAE), special residual aromatic extract (SRAE), and heavy naphthenic oil. Examples of commercially available MES include Catenex SNR (heavy paraffin prepared through dewaxing of distillate oil with a solvent) (manufactured by Shell). Examples of commercially available TDAE include Vivatec 500 (manufactured by H&R Wasag AG). Examples of commercially available SRAE include NC140 (manufactured by Japan Energy Corp.). The amount of the process oil incorporated is preferably 10 to 100 parts by mass with respect to 100 parts by mass of the total amount of rubber components contained in the polymer composition.

The polymer composition may contain, in addition to the aforementioned components, any additive that is commonly used in a rubber composition for tire. Examples of the additive include an antioxidant, zinc flower, stearic acid, a softener, sulfur, a vulcanization accelerator, a silane coupling agent, a compatibilizer, a vulcanization aid, a processing aid, and an anti-scorching agent. The amount of such an additive incorporated into the polymer composition may be appropriately determined, so long as the advantageous effects of the present disclosure are not impaired.

In the polymer composition of the present disclosure, a rubber component, silica, a cross-linking agent, and components to be included if necessary, are kneaded by a kneader such as an open type kneader (for example, a roll) or a closed type kneader (for example, a Banbury mixer), and the kneaded composition is molded and then cross-linked (vulcanized), so that the cross-linked product can be applied to various rubber products. The cross-linked product is applicable to tire including treads, under treads, carcasses, sidewalls and beads; seals such as packing, gaskets, weather strips, O-rings; interior and exterior skin materials for various vehicles such as automobiles, ships, airplanes and railway vehicles; construction materials; anti-vibration rubbers for industrial machinery, equipment, etc.; diaphragms, rolls, and various hoses such as radiator hoses and air hoses as well as hose covers; belts such as power transmission belts; linings; dust boots; materials for medical equipment; fenders; insulating materials for electric wires; and other industrial products.

According to the method for producing a modified conjugated diene-based polymer of the present disclosure, a modified conjugated diene-based polymer excellent in low fuel consumption performance with storage stability can be obtained. Accordingly, a polymer composition containing the modified conjugated diene-based polymer obtained by the production method is particularly suitable as a material for either a tread or a sidewall of a tire, or both of them.

The tire may be produced by a customary method. For example, the polymer composition is mixed by means of a kneader to form a sheet, and the sheet is disposed at a predetermined position (e.g., the outside of a carcass in the case of a sidewall) and vulcanized through a customary method, to thereby form a tread rubber or a sidewall rubber. Then, a pneumatic tire is thereby produced.

### Examples

The present disclosure is specifically described with reference to examples as follows, though the present disclosure is not limited to these examples. Unless otherwise specified, the word "part(s)" and the symbol "%" described in the examples and comparative examples refer to "part(s) by mass" and "% by mass", respectively. The methods for measuring the various physical property values are shown as follows.

### [Evaluation of properties of polymer (raw rubber)]

· Vinyl content (%): Measured by ¹H-NMR at 400 MHz.
· Bonding styrene content (%): Measured by ¹H-NMR at 400 MHz.
· Weight average molecular weight of polymer before modification reaction (peak molecular weight before modification reaction): After modification reaction with use of modification agent, determined in terms of polystyrene from the retention time corresponding to the apex of the peak for the smallest molecular weight of a GPC curve obtained by gel permeation chromatography (GPC) (Viscotek TDA302 (product name (manufactured by Viscotek Corporation))) under the following measurement conditions.

### (GPC measurement conditions)

Columns: 2 columns, product name "TSK gel HHR-H" (manufactured by Tosoh Corporation)
Column temperature: 40°C
Mobile phase: tetrahydrofuran
Flow rate: 1.0 ml/min
Sample concentration: 10 mg/20 ml

· Mooney viscosity (ML₁₊₄, 100°C): In accordance with JIS K6300, determined by using an L rotor under the conditions of a preheating time of 1 minute, a rotor operating time of 4 minutes, and a temperature of 100°C.

### [Evaluation of properties of polymer composition (compounded rubber)]

· Compound Mooney viscosity: The compounded rubber before vulcanization was used as a measurement sample, and the measurement was performed in accordance with JIS K6300, by using an L rotor under the conditions of a preheating time of 1 minute, a rotor operating time of 4 minutes, and a temperature of 100°C. The smaller the value, the better the processability.

### [Evaluation of properties of cross-linked product (vulcanized rubber)]

· 70°C tanδ: The vulcanized rubber as measurement sample was subjected to measurement using a dynamic spectrometer (made by Rheometric Scientific Inc., USA) under the conditions of a tensile dynamic strain of 0.7% and an angular velocity of 100 radians per second at 70°C. The results are shown by an index value, and the larger the value, the smaller the rolling resistance with lower heat generation.

### <Synthesis of compound>

### [Synthesis Example 1: Synthesis of Compound (M-1)]

A 100-mL round-bottom flask was charged with 80 mL of toluene solvent, 4.55 g of isophthalaldehyde, and 15.02 g of 3-aminopropyltriethoxysilane, and refluxing was performed at 120°C using a Dean-Stark apparatus. After the water had run out, refluxing was continued for further 2 hours. Filtration through a filter was then performed, and the toluene solvent was distilled off under reduced pressure. The product was subjected to purity estimation by ¹H-NMR spectrum analysis and GC/MS analysis, and then used as it was as a modifier for obtaining a modified conjugated diene-based polymer.

### <Synthesis and evaluation of modified conjugated diene-based polymer>

### [Example 1: Synthesis of modified conjugated diene-based polymer A and evaluation thereof]

An autoclave reaction vessel having an internal volume of 5 liters was purged with nitrogen and charged with 2500 g of cyclohexane, 50 g of tetrahydrofuran, 125 g of styrene, and 365 g of 1,3-butadiene. The temperature of the contents in the reaction vessel was adjusted to 10°C, and then 5.20 mmol of n-butyllithium and 4.20 mmol of N-trimethylsilylpiperazine were added as the polymerization initiator to initiate polymerization. The polymerization was carried out under adiabatic conditions, and the maximum temperature reached 85°C. When the polymerization conversion rate reached 99% (after 20 minutes from initiation of polymerization), 10 g of 1,3-butadiene was added over a period of 2 minutes. Then, 2.60 mmol of a compound (M-1) was added to perform a reaction for 15 minutes. Subsequently, to the polymer solution after the reaction, 2.60 mmol of 1-decanol was added, and the mixture was stirred for 10 minutes.

Then, to the polymer solution after addition of 1-decanol, 3.96 g of 2,6-di-tert-butyl-p-cresol was added. Subsequently, desolvation was performed by steam stripping, and drying was then carried out using a heat roll adjusted to 110°C to obtain a modified conjugated diene-based polymer A. Various physical property values of the obtained modified conjugated diene-based polymer A are shown in Table 2.

### [Examples 2 to 5: Synthesis of modified conjugated diene-based polymers B to E and physical properties thereof]

Each of the modified conjugated diene-based polymers B to E was obtained by the same procedure as in the case of the modified conjugated diene-based polymer A, except that the types and amounts of the polymerization initiator, terminal modifier and compound [C] used were as shown in Table 1. Various physical property values of the obtained modified conjugated diene-based polymers B to E are shown in Table 2.

### [Comparative Example 1: Synthesis of modified conjugated diene-based polymer P and physical properties thereof]

An autoclave reaction vessel having an internal volume of 5 liters was purged with nitrogen and charged with 2500 g of cyclohexane, 50 g of tetrahydrofuran, 125 g of styrene, and 365 g of 1,3-butadiene. The temperature of the contents in the reaction vessel was adjusted to 10°C, and then 5.20 mmol of n-butyllithium and 4.20 mmol of 1,3-ditrimethylsilyl-1,3,5-triadinane were added as the polymerization initiator to initiate polymerization. The polymerization was carried out under adiabatic conditions, and the maximum temperature reached 85°C. When the polymerization conversion rate reached 99% (after 20 minutes from initiation of polymerization), 10 g of 1,3-butadiene was added over a period of 2 minutes. Then, 2.60 mmol of a compound (M-1) was added to perform a reaction for 15 minutes.

Then, to the polymer solution after the reaction, 3.96 g of 2,6-di-tert-butyl-p-cresol was added. Subsequently, desolvation was performed by steam stripping, and drying was then carried out using a heat roll adjusted to 110°C to obtain a modified conjugated diene-based polymer P. Various physical property values of the obtained modified conjugated diene-based polymer P are shown in Table 2.

### [Comparative Example 2: Synthesis of modified conjugated diene-based polymer Q and physical properties thereof]

The modified conjugated diene-based polymer Q was obtained by the same procedure as in the case of the modified conjugated diene-based polymer P, except that the types and amounts of the polymerization initiator and terminal modifier used were as shown in Table 1. Various physical property values of the obtained modified conjugated diene-based polymer Q are shown in Table 2.

**[Table 1]**

| | | | Example 1 | Example 2 | Example 3 | Example 4 | Example 5 | Comparative Example 1 | Comparative Example 2 |
|---|---|---|---|---|---|---|---|---|---|
| Types of modified conjugated diene-based polymer | | | A | B | C | D | E | P | Q |
| Polymerization formulation | | | | | | | | | |
| | Solvent | | | | | | | | |
| | : Cyclohexane | (g) | 2500 | 2500 | 2500 | 2500 | 2500 | 2500 | 2500 |
| | Vinyl content adjusting agent | | | | | | | | |
| | : Tetrahydrofuran | (g) | 50 | 50 | 50 | 50 | 50 | 50 | 50 |
| | Polymerization monomer | | | | | | | | |
| | : Styrene | (g) | 125 | 125 | 125 | 125 | 125 | 125 | 125 |
| | : 1,3-Butadiene | (g) | 365 | 365 | 365 | 365 | 365 | 365 | 365 |
| | : Supplemental butadiene | (g) | 10 | 10 | 10 | 10 | 10 | 10 | 10 |
| | Polymerization initiator | | | | | | | | |
| | : n-Butyllithium | (mmol) | 5.20 | 5.20 | 5.20 | 5.20 | 5.20 | 5.20 | 5.20 |
| | : INI-1 | (mmol) | 4.20 | - | - | 4.20 | 4.20 | - | - |
| | : INI-2 | (mmol) | - | 4.20 | - | - | - | 4.20 | - |
| | : INI-3 | (mmol) | - | - | 4.20 | - | - | - | 4.20 |
| | Terminal modifier (Compound [M]) | | | | | | | | |
| | : M-1 | (mmol) | 2.60 | 1.30 | 2.60 | - | - | 2.60 | - |
| | : M-2 | (mmol) | - | - | - | 1.30 | - | - | 1.30 |
| | : M-3 | (mmol) | - | - | - | - | 1.30 | - | - |
| | Compound [C] | | | | | | | | |
| | : C-1 | (mmol) | 2.60 | - | 7.80 | - | - | - | - |
| | : C-2 | (mmol) | - | 5.20 | - | 5.20 | - | - | - |
| | : C-3 | (mmol) | - | - | - | - | 2.60 | - | - |

In Table 1, "-" indicates that the compound in the corresponding column was not used. Abbreviations of the compounds in Table 1 are as follows.

### (Polymerization initiator)

INI-1: N-trimethylsilylpiperazine
INI-2: 1,3-ditrimethylsilyl-1,3,5-triazinane
INI-3: piperidine

### (Terminal modifier)

M-1 to M-3: compounds represented by formulas (M-1) to (M-3), respectively

### (Compound [C])

C-1 to C-3: compounds represented by formulas (C-1) to (C-3), respectively.

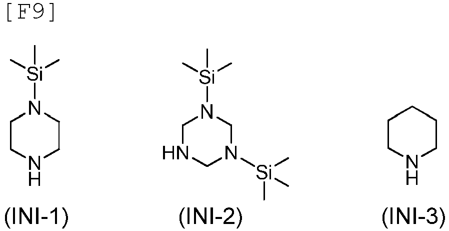

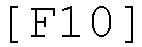

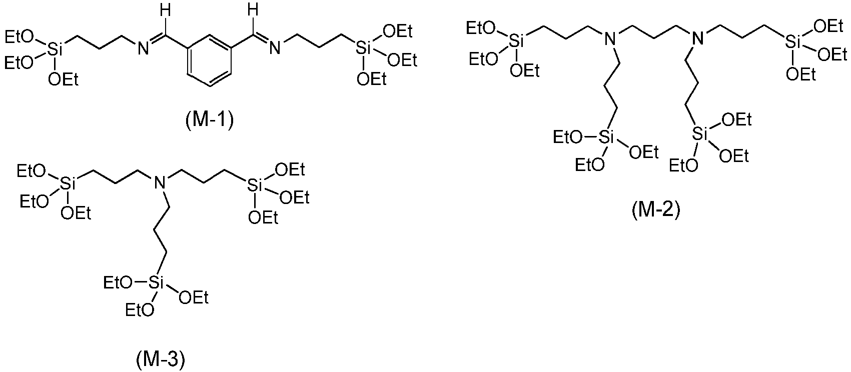

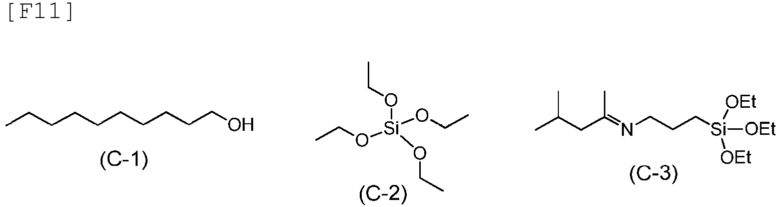

**[Table 2]**

| | Example 1 | Example 2 | Example 3 | Example 4 | Example 5 | Comparative Example 1 | Comparative Example 2 |
|---|---|---|---|---|---|---|---|
| Types of modified conjugated diene-based polymer | A | B | C | D | E | P | Q |
| Bonding styrene content (%) | 25 | 25 | 25 | 25 | 25 | 25 | 25 |
| Vinyl content (%) | 54 | 56 | 55 | 55 | 55 | 56 | 55 |
| Weight average molecular weight before modification (×10⁴) | 18 | 17 | 18 | 17 | 18 | 18 | 18 |
| Mooney viscosity (ML₁₊₄, 100°C) | 71 | 79 | 70 | 80 | 75 | 68 | 77 |

### [Production of compounded rubber and vulcanized rubber]

Using the modified conjugated diene-based polymer A to E, P or Q produced as described above, each of the components was combined according to the compounding formulation shown in Table 3, and the formulation was kneaded to produce a compounded rubber. Kneading was performed by the following method. Using a plastomill (internal capacity: 250 ml) equipped with a temperature control device, a first stage of kneading was carried out by combining and kneading the modified conjugated diene-based polymer, polybutadiene rubber, extender oil, silica, carbon black, a silane coupling agent, stearic acid, an antioxidant, and zinc oxide under the conditions of a filling rate of 72% and a rotation speed of 60 rpm to obtain a compound. Subsequently, as a second stage of kneading, after cooling the compound obtained above to room temperature, sulfur and a vulcanization accelerator were added thereto and the resultant was kneaded. The kneaded product was molded, and then vulcanized at 160°C for a predetermined time with a vulcanization press to obtain a cross-linked product (vulcanized rubber).

### [Evaluation]

The compound Mooney viscosity and 70°C tanδ of the compounded rubber and the vulcanized rubber obtained were measured, respectively. The measurement results are shown in a column "After production" of Table 4.

### [Evaluation of storage stability]

Each of the modified conjugated diene-based polymers A to E, P and Q (raw rubber) obtained was stored in a constant temperature and humidity testing chamber (manufactured by Tabai ESPEC Corporation) under the conditions at a temperature of 85°C and a humidity of 85% for 500 hours. Further, using the raw rubber after storage, a compounded rubber and a vulcanized rubber were produced according to the above method, and the compound Mooney viscosity and 70°C tanδ were measured. Also, the amount of change in each of the compound Mooney viscosity and 70°C tanδ before and after storage under high temperature and high humidity was calculated. The evaluation results of Examples and Comparative Examples are shown in Table 4. Each of the measurement results of 70°C tanδ is shown by an index value with respect to 100 corresponding to 70°C tanδ before storage at a high temperature and high humidity in Comparative Example 1 (70°C tanδ after production).

**[Table 3]**

| Compounding formulation | | part(s) by mass |
|---|---|---|
| Modified conjugated diene-based polymer | | 70 |
| Polybutadiene rubber | *1 | 30 |
| Extender oil | *2 | 37.5 |
| Silica | *3 | 70 |
| Carbon black | *4 | 5.6 |
| Silane coupling agent | *5 | 5.6 |
| Stearic acid | | 2 |
| Antioxidant | *6 | 1 |
| Zinc oxide | | 3 |
| Vulcanization accelerator D | *7 | 1.5 |
| vulcanization accelerator CZ | *8 | 1.8 |
| Sulfur | | 1.5 |

| | | |
|---|---|---|
| *1: BR01 manufactured by JSR Corporation *2: JOMO Process NC-140 manufactured by Japan Energy Inc. *3: ZEOSIL 1165MP manufactured by Rhodia *4: Diablack N339 manufactured by Mitsubishi Chemical Corporation *5: Si75 manufactured by Evonik Industries *6: Ozonone 6C manufactured by Seiko Chemical Co., Ltd. *7: Noxeller D manufactured by Ouchi Shinko Chemical Industrial Co., Ltd. *8: Noxeller CZ manufactured by Ouchi Shinko Chemical Co., Ltd. | | |

In Table 3, the product names used for the respective components are as follows. *1: BR01 manufactured by JSR Corporation, *2: JOMO Process NC-140 manufactured by Japan Energy Inc., *3: ZEOSIL 1165MP manufactured by Rhodia, *4: Diablack N339 manufactured by Mitsubishi Chemical Corporation, *5: Si75 manufactured by Evonik Industries, *6: Ozonone 6C manufactured by Seiko Chemical Co., Ltd., *7: Noxeller D manufactured by Ouchi Shinko Chemical Industrial Co., Ltd., *8: Noxeller CZ manufactured by Ouchi Shinko Chemical Co., Ltd.

**[Table 4]**

| | | Example 1 | Example 2 | Example 3 | Example 4 | Example 5 | Comparative Example 1 | Comparative Example 2 |
|---|---|---|---|---|---|---|---|---|
| Types of modified conjugated diene-based polymer | | A | B | C | D | E | P | Q |
| Compound Mooney viscosity (ML₁₊₄, 100°C) | | | | | | | | |
| | After production | 71 | 79 | 70 | 85 | 80 | 68 | 80 |
| | After storage | 71 | 80 | 71 | 88 | 82 | 95 | 97 |
| | Amount of change | 0 | 1 | 1 | 3 | 2 | 27 | 17 |
| 70°Ctanδ (INDEX) | | | | | | | | |
| | After production | 102 | 103 | 105 | 102 | 101 | 100 | 101 |
| | After storage | 99 | 100 | 105 | 100 | 101 | 80 | 78 |
| | Amount of change | 3 | 3 | 0 | 2 | 0 | 20 | 23 |

Each of the modified conjugated diene-based polymers in Examples 1 to 5 had only a small amount of change in the compound Mooney viscosity before and after storage under high temperature and high humidity, which was 3 or less. Also, the amount of change in 70°C tanδ before and after storage was as small as 3 or less in all Examples. In contrast, the modified conjugated diene-based polymers in Comparative Examples 1 and 2 without addition of compound [C] to the polymer solution after the modification reaction by the compound [M] in the production process of the modified conjugated diene-based polymer, had an amount of change in the compound Mooney viscosity before and after storage of 27 and 17, respectively, and resulted in great increase in the viscosity. In addition, 70°C tanδ also changed significantly before and after storage.

From these results, it has been shown that a modified conjugated diene-based polymer excellent in stability over time can be obtained by adding the compound [C] to the polymer solution after the modification reaction by the compound [M] in the production step of the modified conjugated diene-based polymer.

## Claims

1. A method for producing a modified conjugated diene-based polymer, comprising:
a polymerization step of polymerizing a monomer comprising a conjugated diene compound in the presence of an alkali metal compound or an alkali earth metal compound to obtain a polymer having an active terminal;
a modification step of reacting the polymer having an active terminal with a compound [M] having a plurality of hydrocarbyloxysilyl groups to obtain a modified polymer; and
a mixing step of mixing the modified polymer with at least one compound [C] selected from the group consisting of a compound [N] having one hydrocarbyloxysilyl group and an alcohol having 6 to 20 carbon atoms in an organic solvent.

2. The method for producing the modified conjugated diene-based polymer according to claim 1, wherein the mixing step is a step of mixing the modified polymer and the compound [C] without adding a condensation catalyst.

3. The method for producing the modified conjugated diene-based polymer according to claim 1 or 2, wherein the compound [M] is at least one selected from the group consisting of the compound represented by formula (1) and the compound represented by formula (2): 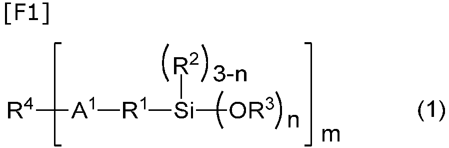 wherein R¹ is a hydrocarbylene group having 1 to 20 carbon atoms, R² and R³ each are independently a hydrocarbyl group having 1 to 20 carbon atoms, A¹ is a group "*-C(R⁵)=N-" or a group "*-N=C(R⁵)-", wherein R⁵ is a hydrogen atom or a hydrocarbyl group, and "*" represents a bond for bonding to R⁴; R⁴ is an m-valent hydrocarbon group having 1 to 20 carbon atoms or an m-valent group having at least one atom selected from the group consisting of nitrogen, oxygen and sulfur, and no active hydrogen, and having 1 to 20 carbon atoms; n is an integer of 1 to 3 and m is an integer of 2 to 10; for symbols of R¹ to R³ and A¹ each, in the case where a plurality of the same symbols are present in the formula, the groups represented by the symbols are the same or different groups from each other; and the plurality of n in the formula are the same number or different numbers from each other. 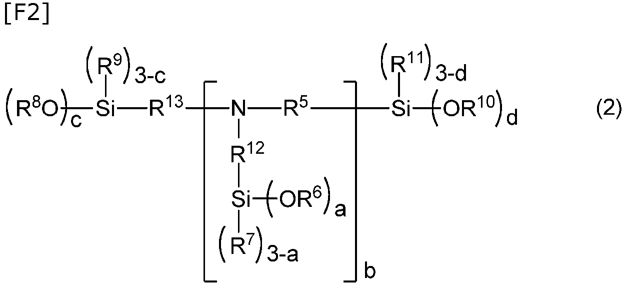 wherein R⁵, R¹² and R¹³ each are independently a hydrocarbylene group having 1 to 12 carbon atoms, and R⁶, R⁷, R⁸, R⁹, R¹⁰ and R¹¹ each are independently a hydrocarbyl group having 1 to 20 carbon atoms; a, c and d each are independently an integer of 1 to 3, and b is an integer of 1 to 10; for symbols of R⁵ to R¹² each, in the case where a plurality of the same symbols are present in the formula, the groups represented by the symbols are the same or different groups from each other; and in the case where 2 or more b are present, the plurality of a in the formula are the same number or different numbers from each other.

4. The method for producing the modified conjugated diene-based polymer according to any one of claims 1 to 3, wherein the compound [N] is a low molecular weight compound having a molecular weight of 800 or less.

5. The method for producing the modified conjugated diene-based polymer according to any one of claims 1 to 4, wherein the polymerization step is a step of polymerizing the monomer in the presence of a compound obtained by mixing an alkali metal compound or an alkali earth metal compound and a compound having a functional group that interacts with silica.

6. The method for producing the modified conjugated diene-based polymer according to any one of claims 1 to 5, wherein the monomer further comprises an aromatic vinyl compound.

7. A modified conjugated diene-based polymer obtained by:
polymerizing a monomer comprising a conjugated diene compound in the presence of an alkali metal compound or an alkali earth metal compound to obtain a polymer having an active terminal;
reacting the polymer having an active terminal and a compound [M] having a plurality of hydrocarbyloxysilyl groups to obtain a modified polymer; and
mixing the modified polymer and at least one compound [C] selected from the group consisting of a compound [N] having one hydrocarbyloxysilyl group and an alcohol having 6 to 20 carbon atoms in an organic solvent.

8. A polymer composition comprising a modified conjugated diene-based polymer obtained by the method according to any one of claims 1 to 6 and silica.

9. A cross-linked product obtained by cross-linking the polymer composition according to claim 8.

10. A tire comprising a tread, a sidewall, or both of them formed from the polymer composition according to claim 8.

## Patentansprüche

1. Verfahren zur Herstellung eines modifizierten Polymers auf Basis eines konjugierten Diens, umfassend:
einen Polymerisationsschritt, bei dem ein Monomer, das eine konjugierte Dienverbindung umfasst, in Gegenwart einer Alkalimetallverbindung oder einer Erdalkalimetallverbindung polymerisiert wird, um ein Polymer mit einem aktiven Ende zu erhalten;
einen Modifizierungsschritt, bei dem das Polymer mit einem aktiven Ende mit einer Verbindung [M] mit mehreren Hydrocarbyloxysilylgruppen umgesetzt wird, um ein modifiziertes Polymer zu erhalten; und
einen Mischschritt, bei dem das modifizierte Polymer mit zumindest einer Verbindung [C], ausgewählt aus der Gruppe bestehend aus einer Verbindung [N] mit einer Hydrocarbyloxysilylgruppe und einem Alkohol mit 6 bis 20 Kohlenstoffatomen, in einem organischen Lösungsmittel gemischt wird.

2. Verfahren zur Herstellung des modifizierten Polymers auf Basis eines konjugierten Diens nach Anspruch 1, wobei der Mischschritt ein Schritt des Mischens des modifizierten Polymers und der Verbindung [C] ohne Zugabe eines Kondensationskatalysators ist.

3. Verfahren zur Herstellung des modifizierten Polymers auf Basis eines konjugierten Diens nach Anspruch 1 oder 2, wobei die Verbindung [M] zumindest eine Verbindung ist, die aus der Gruppe ausgewählt ist, die aus der durch die Formel (1) dargestellten Verbindung und der durch die Formel (2) Verbindung dargestellten besteht: 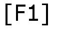 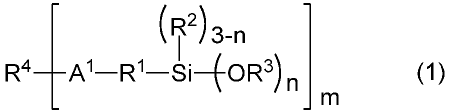 wobei R¹ eine Kohlenwasserstoffgruppe mit 1 bis 20 Kohlenstoffatomen ist, R² und R³ jeweils unabhängig voneinander eine Kohlenwasserstoffgruppe mit 1 bis 20 Kohlenstoffatomen sind, A¹ eine Gruppe "*-C(R⁵)=N-" oder eine Gruppe "*-N=C(R⁵)-" ist, wobei R⁵ ein Wasserstoffatom oder eine Kohlenwasserstoffgruppe ist und "*" eine Bindung zur Bindung an R⁴ darstellt; R⁴ eine m-wertige Kohlenwasserstoffgruppe mit 1 bis 20 Kohlenstoffatomen oder eine m-wertige Gruppe mit mindestens einem Atom, ausgewählt aus der Gruppe bestehend aus Stickstoff, Sauerstoff und Schwefel, und ohne aktiven Wasserstoff und mit 1 bis 20 Kohlenstoffatomen ist; n eine ganze Zahl von 1 bis 3 ist und m eine ganze Zahl von 2 bis 10 ist; für die Symbole R¹ bis R³ und A¹ jeweils, wenn mehrere gleiche Symbole in der Formel vorhanden sind, die durch die Symbole dargestellten Gruppen gleiche oder voneinander verschiedene Gruppen sind; und die mehreren n in der Formel gleiche Zahlen oder voneinander verschiedene Zahlen sind. 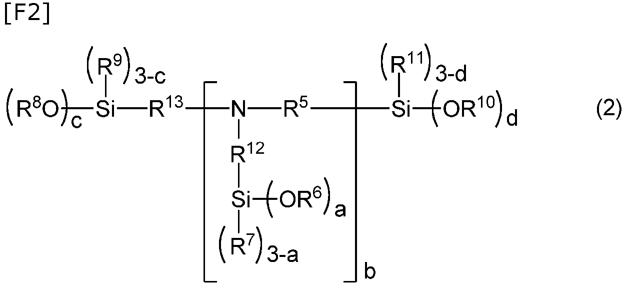 wobei R⁵, R¹² und R¹³ jeweils unabhängig voneinander eine Kohlenwasserstoffgruppe mit 1 bis 12 Kohlenstoffatomen sind und R⁶, R⁷, R⁸, R⁹, R¹⁰ und R¹¹ jeweils unabhängig voneinander eine Kohlenwasserstoffgruppe mit 1 bis 20 Kohlenstoffatomen sind; a, c und d jeweils unabhängig voneinander eine ganze Zahl von 1 bis 3 sind und b eine ganze Zahl von 1 bis 10 ist; für die Symbole R⁵ bis R¹² jeweils, wenn mehrere gleiche Symbole in der Formel vorhanden sind, die durch die Symbole dargestellten Gruppen gleiche oder voneinander verschiedene Gruppen sind; und wenn zwei oder mehr b vorhanden sind, die mehreren a in der Formel gleiche Zahlen oder voneinander verschiedene Zahlen sind.

4. Verfahren zur Herstellung des modifizierten Polymers auf Basis eines konjugierten Diens nach einem der Ansprüche 1 bis 3, wobei die Verbindung [N] eine niedermolekulare Verbindung mit einer Molmasse von 800 oder weniger ist.

5. Verfahren zur Herstellung des modifizierten Polymers auf Basis eines konjugierten Diens nach einem der Ansprüche 1 bis 4, wobei der Polymerisationsschritt ein Schritt zum Polymerisieren des Monomers in Gegenwart einer Verbindung ist, die durch Mischen einer Alkalimetallverbindung oder einer Erdalkalimetallverbindung und einer Verbindung mit einer funktionellen Gruppe, die mit Siliciumoxid interagiert, erhalten ist.

6. Verfahren zur Herstellung des modifizierten Polymers auf Basis eines konjugierten Diens nach einem der Ansprüche 1 bis 5, wobei das Monomer ferner eine aromatische Vinylverbindung umfasst.

7. Modifiziertes Polymer auf Basis eines konjugierten Diens, erhalten durch:
Polymerisieren eines Monomers, das eine konjugierte Dienverbindung umfasst, in Gegenwart einer Alkalimetallverbindung oder einer Erdalkalimetallverbindung, um ein Polymer mit einem aktiven Ende zu erhalten;
Umsetzen des Polymers mit einem aktiven Ende und einer Verbindung [M] mit mehreren Hydrocarbyloxysilylgruppen, um ein modifiziertes Polymer zu erhalten; und
Mischen des modifizierten Polymers und zumindest einer Verbindung [C], ausgewählt aus der Gruppe bestehend aus einer Verbindung [N] mit einer Hydrocarbyloxysilylgruppe und einem Alkohol mit 6 bis 20 Kohlenstoffatomen, in einem organischen Lösungsmittel.

8. Polymerzusammensetzung, umfassend ein modifiziertes Polymer auf Basis eines konjugierten Diens, das nach einem der Verfahren nach den Ansprüchen 1 bis 6 erhalten wurde, und Siliciumoxid.

9. Vernetztes Produkt, erhalten durch Vernetzen der Polymerzusammensetzung nach Anspruch 8.

10. Reifen, umfassend eine Lauffläche, eine Seitenwand oder beide, gebildet aus der Polymerzusammensetzung nach Anspruch 8.

## Revendications

1. Procédé de production d'un polymère modifié à base de diène conjugué, comprenant :
une étape de polymérisation consistant à polymériser un monomère comprenant un composé de diène conjugué en présence d'un composé de métal alcalin ou d'un composé de métal alcalino-terreux pour obtenir un polymère ayant un terminal actif;
une étape de modification consistant à faire réagir le polymère ayant un terminal actif avec un composé [M] ayant une pluralité de groupes hydrocarbyloxysilyle pour obtenir un polymère modifié ; et
une étape de mélange consistant à mélanger le polymère modifié avec au moins un composé [C] choisi dans le groupe constitué d'un composé [N] ayant un groupe hydrocarbyloxysilyle et d'un alcool ayant 6 à 20 atomes de carbone dans un solvant organique.

2. Procédé de production du polymère modifié à base de diène conjugué selon la revendication 1, dans lequel l'étape de mélange est une étape consistant à mélanger le polymère modifié et le composé [C] sans ajouter de catalyseur de condensation.

3. Procédé de production du polymère modifié à base de diène conjugué selon la revendication 1 ou 2, dans lequel le composé [M] est au moins un composé choisi dans le groupe constitué par le composé représenté par la formule (1) et le composé représenté par la formule (2) : 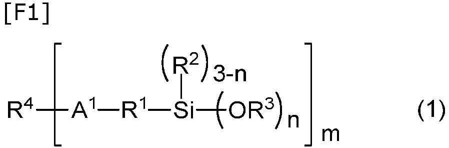 dans lequel R¹ est un groupe hydrocarbylène ayant 1 à 20 atomes de carbone, R² et R³ sont chacun indépendamment un groupe hydrocarbyle ayant 1 à 20 atomes de carbone, A¹ est un groupe « *-C(R⁵)=N- » ou un groupe « *-N=C(R⁵)- », dans lequel R⁵ est un atome d'hydrogène ou un groupe hydrocarbyle, et « * » représente une liaison pour la liaison à R⁴ ; R⁴ est un groupe hydrocarboné m-valent ayant 1 à 20 atomes de carbone ou un groupe m-valent ayant au moins un atome choisi dans le groupe constitué par l'azote, l'oxygène et le soufre, et aucun hydrogène actif, et ayant 1 à 20 atomes de carbone ; n est un nombre entier de 1 à 3 et m est un nombre entier de 2 à 10 ; pour des symboles R¹ à R³ et A¹, respectivement, dans le cas où une pluralité des symboles identiques sont présents dans la formule, les groupes représentés par les symboles sont des groupes identiques ou différents les uns des autres ; et la pluralité de n dans la formule sont des nombres identiques ou différents les uns des autres. 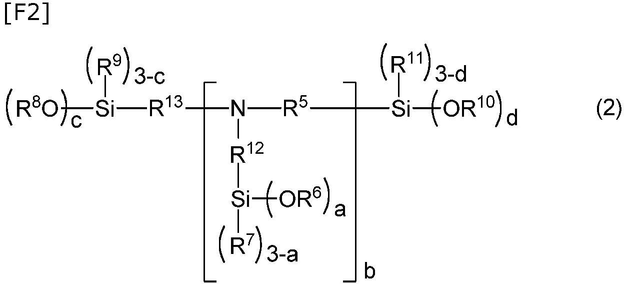 dans lequel R⁵, R¹² et R¹³ sont chacun indépendamment un groupe hydrocarbylène ayant 1 à 12 atomes de carbone, et R⁶, R⁷, R⁸, R⁹, R¹⁰ et R¹¹ sont chacun indépendamment un groupe hydrocarbyle ayant 1 à 20 atomes de carbone ; a, c et d sont chacun indépendamment un nombre entier de 1 à 3, et b est un nombre entier de 1 à 10 ; pour les symboles R⁵ à R¹², respectivement, dans le cas où une pluralité des symboles identiques sont présents dans la formule, les groupes représentés par les symboles sont des groupes identiques ou différents les uns des autres ; et dans le cas où deux ou plusieurs b sont présents, la pluralité de a dans la formule sont le même nombre ou des nombres différents les uns des autres.

4. Procédé de production du polymère modifié à base de diène conjugué selon l'une quelconque des revendications 1 à 3, dans lequel le composé [N] est un composé de faible poids moléculaire ayant un poids moléculaire de 800 ou moins.

5. Procédé de production du polymère à base de diène conjugué modifié selon l'une quelconque des revendications 1 à 4, dans lequel l'étape de polymérisation est une étape de polymérisation du monomère en présence d'un composé obtenu en mélangeant un composé de métal alcalin ou un composé de métal alcalino-terreux et un composé ayant un groupe fonctionnel qui interagit avec la silice.

6. Procédé de production du polymère modifié à base de diène conjugué selon l'une quelconque des revendications 1 à 5, dans lequel le monomère comprend en outre un composé vinylique aromatique.

7. Polymère modifié à base de diène conjugué obtenu par :
la polymérisation d'un monomère comprenant un composé de diène conjugué en présence d'un composé de métal alcalin ou d'un composé de métal alcalino-terreux pour obtenir un polymère ayant un terminal actif ;
la réaction du polymère ayant un terminal actif et un composé [M] ayant une pluralité de groupes hydrocarbyloxysilyle pour obtenir un polymère modifié ; et
le mélange du polymère modifié et d'au moins un composé [C] choisi parmi le groupe constitué d'un composé [N] ayant un groupe hydrocarbyloxysilyle et d'un alcool ayant 6 à 20 atomes de carbone dans un solvant organique.

8. Composition polymère comprenant un polymère modifié à base de diène conjugué obtenu par le procédé selon l'une quelconque des revendications 1 à 6 et de la silice.

9. Produit réticulé obtenu par réticulation de la composition polymère selon la revendication 8.

10. Pneu comprenant une bande de roulement, un flanc, ou les deux, formés à partir de la composition polymère selon la revendication 8.
